# NEUE EUROPÄISCHE PATENTSCHRIFT

(11) **EP 2 640 585 B2**
(45) Veröffentlichungstag und Bekanntmachung des Hinweises auf die Entscheidung über den Einspruch: **30.06.2021**
(45) Hinweis auf die Patenterteilung: 27.01.2016
(21) Anmeldenummer: 11776719.4
(22) Anmeldetag: 29.10.2011
(51) Int. Cl.: B60H 1/00

(54) **FAHRZEUG MIT EINER KLIMAANLAGE**
VEHICLE HAVING AN AIR CONDITIONING SYSTEM
VÉHICULE DOTÉ D'UN SYSTÈME DE CLIMATISATION

(30) Priorität: 15.11.2010 DE 102010051471
(43) Veröffentlichungstag der Anmeldung: 25.09.2013
(73) Patentinhaber: Audi AG, 85045 Ingolstadt (DE); Hanon Systems, Daedeok-gu 306-230 Daejeon-si (KR)
(72) Erfinder: SCHROEDER, Dirk, 85107 Baar-Ebenhausen (DE); HAMMER, Hans, 85276 Pfaffenhofen (DE); REBINGER, Christian, 86356 Neusäss (DE); HEYL, Peter, 50999 Köln (DE)
(74) Vertreter: Müller Hoffmann & Partner
(86) Internationale Anmeldenummer: PCT/EP2011/005484
(87) Internationale Veröffentlichungsnummer: WO 2012/065687

(56) Entgegenhaltungen:
- DE-A1-102005 005 430
- DE-B4- 10 253 357
- US-A1- 2003 182 961
- US-B1- 6 430 951

## Beschreibung

Die Erfindung betrifft ein Fahrzeug mit einer Klimaanlage nach dem Oberbegriff des Patentanspruches 1, wie offenbart in DE 10 2005 005430 A1.

Die Beheizung des Fahrzeuginnenraums erfolgt üblicherweise mit einem Heizungswärmetauscher, dem über einen zum Beispiel wassergeführten Kühlmittelkreislauf die Abwärme eines Antriebsaggregates, etwa einer Brennkraftmaschine, zugeführt wird. Dem Heizungswärmetauscher ist üblicherweise ein Zuheizer zugeordnet. Bei Fahrzeugen mit einer Klimaanlage kann der Zuheizer ein in den Kältemittelkreislauf der Klimaanlage geschalteter Kondensator sein, der im Heizbetrieb Wärme an die in den Fahrzeuginnenraum einströmende Zuluft abgibt.

Aus der DE 102 53 357 B4 ist ein gattungsgemäßes Fahrzeug mit einer Klimaanlage bekannt. Im Heizbetrieb wird die in den Fahrzeuginnenraum strömende Zuluft mittels eines Heizungswärmetauschers, der über einen Kühlmittelkreislauf thermisch mit einem Antriebsaggregat gekoppelt ist, und einem Zusatzwärmeübertrager erwärmt. Der Zusatzwärmeübertrager ist in einem Kältemittelkreislauf der Klimaanlage geschaltet. Sowohl der Zusatzwärmeübertrager als auch der Heizungswärmetauscher sind in einem luftdurchströmten Klimagerät angeordnet, wobei die aus dem Klimagerät ausströmende Warmluft aufgeteilt und zu mehreren voneinander separaten Personenausströmern geleitet wird.

Zukünftige Diesel- aber auch Benzinmotoren werden nicht die erforderliche Heizwärme zur Erwärmung des Passagierraumes zur Verfügung stellen können. Es sind zusätzliche Heizmaßnahmen wie Kraftstoffbrenner oder PTC erforderlich. Eine effizientere und umweltschonende Maßnahme ist die Verwendung der vorhandenen Klimaanlage und deren Betrieb im Wärmepumpenmodus.

Neben Umschaltventilen wird u.a. ein zusätzlicher Kondensator, der als Zuheizer arbeitet und im Klimagerät verbaut ist, eingesetzt.

Die Aufgabe der Erfindung besteht darin, ein Fahrzeug mit einer Klimaanlage zum Kühlen und Heizen mit entsprechender Heizleistung und Effizienz bereitzustellen. Darüber hinaus soll der zusätzliche Wärmepumpenkondensator so aufgebaut sein, dass die aus ihm austretende Luft eine gute Homogenität aufweist, gleichbedeutend mit einer gleichmäßigen Temperaturverteilung, die wiederum einen positiven Einfluss auf die Regelgüte hinsichtlich des Innenraumkomforts für die Passagiere hat.

Die Aufgabe ist durch die Merkmale des Patentanspruches 1 gelöst. Bevorzugte Weiterbildungen der Erfindung sind in den Unteransprüche offenbart.

Gemäß dem kennzeichnenden Teil des Patentanspruches 1 ist der im Heizbetrieb als Zuheizer arbeitende Kondensator zumindest zweireihig mit einer ersten Wärmeübertrager-Reihe sowie mit einer damit verbundenen zweiten Wärmeübertrager-Reihe ausgeführt. Die beiden Wärmeübertrager-Reihen sowie der im Kühlmittelkreislauf geschaltete Heizungswärmeübertrager sind in der Strömungsrichtung der einströmenden Zuluft in Reihe zueinander geschaltet, wobei je nach Anwendung zuerst der Heizungswärmeübertrager und dann der Zusatzwärmeübertrager oder zuerst der Zusatzwärmeübertrager und im Anschluss der Heizungswärmeübertrager angeordnet sind. Durch die zweireihige Ausführung des Zusatzwärmeübertragers ergibt sich ein Strömungsbild des aus dem Klimagerät austretenden Warmluftstromes, das eine gleichbleibende Lufttemperatur. über den gesamten Strömungsquerschnitt des Warmluftstromes aufweist. Der durch den zweireihigen Zusatzwärmeübertrager geführte Haupt-Zuluftstrom kann somit in Teilströme mit jeweils identischer Warmluft-Temperatur aufgeteilt werden, wodurch die an den unterschiedlichen Personenausströmern austretende Warmluft zuverlässig die benutzerseitig eingestellte Warmluft-Temperatur aufweist.

Zusätzlich sind die beiden Wärmeübertrager-Reihen so aufeinander abgestimmt, dass in der zweiten Wärmeübertrager-Reihe eine Unterkühlung des kondensierten Kältemittels stattfindet. Funktionell davon getrennt erfolgt in der ersten Wärmeübertrager-Reihe zumindest eine Enthitzung und gegebenenfalls eine Kondensation des vom Verdichter zugeführten Kältemittels. Unter Enthitzung ist die Abkühlung des Kältemittels bis zum Erreichen der Taulinie eines Mollier-Diagramms zu verstehen. Durch die Trennung von Enthitzung/Kondensation und Unterkühlung wird sowohl eine effiziente Lufterwärmung sowie gleichmäßige Lufterwärmung erreicht. Durch eine gezielte erfinderische Aufteilung der Wärmeübertragerflächen für die Unterkühlung und Enthitzung/Kondensation wird eine im Vergleich zum Kühlbetrieb hohe Kondensationstemperatur erreicht. So kann die Wärmeübertragung vom Zusatzwärmeübertrager zur einströmenden Zuluft mit einer ebenfalls erhöhten, treibenden Temperaturdifferenz erfolgen. Die aus dem Zusatzwärmeübertrager und dem Heizungswärmeübertrager bestehende Heizanordnung kann somit den Heizbedarf auch in Extremsituationen ohne weiteres abdecken.

Wie oben erwähnt, wird durch die erfindungsgemäß zweireihige Ausführung des Zusatzwärmeübertragers mit entsprechender Aufteilung der Wärmeübertragerflächen eine erhöhte Kondensationstemperatur im Wärmepumpenprozess der Klimaanlage erzielt. Damit können im Kältemittelkreislauf auch Kältemittel Anwendung finden, mit denen lediglich reduzierte Verdichteraustritts- bzw. Kondensationstemperaturen erreichbar sind.

Die beiden Wärmeübertrager-Reihen sind strömungstechnisch mit einem Sammlerrohr verbunden. Das Sammlerrohr sammelt das aus der ersten Wärmeübertrager-Reihe austretende flüssige Kältemittel und transferiert das flüssige Kältemittel zur zweiten Wärmeübertrager-Reihe. Das Sammlerrohr kann hierzu bevorzugt jeweils in die Unterseite der ersten und der zweiten Wärmeübertrager-Reihe münden, wodurch sich das kondensierte Kältemittel ohne weiteres im Sammlerrohr sammeln kann. Das Sammlerrohr weist zudem einen Abscheideraum auf, in dem gegebenenfalls noch dampfförmiges Kältemittel vom flüssigen Kältemittel abgeschieden werden kann. Auf diese Weise ist eine funktionelle Trennung der beiden Wärmeübertrager-Reihen zwischen der Enthitzungs-/Kondensationsfunktion und der Unterkühlungs-Funktion erzielt. Das Sammlerrohr kann als Receiver ausgebildet sein. Zudem kann das Sammlerrohr auch als ein Flachrohr oder als ein Doppelrohr ausgeführt sein. Ergänzend kann das Sammlerrohr horizontal oder vertikal positioniert werden.

Die Anhebung der Kondensationstemperatur des Kältemittels in der Kondensations-Reihe des Wärmeübertragers kann bevorzugt durch eine Reduzierung der wirksamen Kondensationsfläche erzielt werden. Eine solche Reduzierung der Kondensationsfläche führt im Wärmepumpenbetrieb des Kältemittelkreislaufes dazu, dass sich in der Kondensations-Reihe des Zusatzwärmeübertragers ein wesentlich höherer Kondensationsdruck mit entsprechend erhöhter Kondensationstemperatur einstellt.

Im Unterschied zur stark reduzierten Enthitzungs-/Kondensations-Wärmeübertragerfläche kann die Unterkühlungswärmeübertragerfläche wesentlich größer dimensioniert sein. Die Wärmeübertragerfläche zur Enthitzung ist je nach Kältemittelkreislauf (mit/ohne innerem Wärmeübertrager) nahezu vernachlässigbar. Die Unterkühlungsstrecke kann um ein Vielfaches größer sein als die Wärmeübertragerfläche der Kondensation. Das Wärmeübertragerflächenverhältnis zwischen Enthitzung/Kondensation sowie Unterkühlung kann dabei zwischen 70/30 bis 1/99% variieren. Bei dieser Auslegung ist es wichtig, dass die inneren Volumina speziell des Unterkühlungsabschnittes und der anschließenden Leitungen minimal ausgeführt sind, um die Füllmenge auf ein bestimmtes Niveau begrenzen zu können. Die beschriebenen Flächenverhältnisse beziehen sich auf die Frontfläche eines einreihigen Heizungswärmeübertragers.

Bei einer mehrreihigen Ausführung ist die Einführung eines normierten Volumenverhältnisses sinnvoll, da in mehreren Ebenen die Stirnfläche gleich ist. Bei Einführung eines normierten Volumenverhältnisses für mehrreihige Wärmeübertrager bei gleichem Flächenverhältnis der Wärmeübertragerebenen (ansonsten rechnerisch anpassen), kann sich die folgende Gestaltung ergeben: 15 % Unterkühlung / 85 % Kondensation bis 99 % Unterkühlung / 1 % Kondensation.

Im Unterschied zur erfindungsgemäßen Dimensionierung der Wärmeübertrager-Reihen sind die herkömmlichen Kondensatoren einer Klimaanlage umgekehrt mit einer vergleichsweise großen Enthitzungs/Kondensationsstrecke und einer entsprechend reduzierten Unterkühlstrecke aufgelegt (oberhalb des erwähnten Flächenverhältnisses 70/30 %).

Für eine effektive Wärmeübertragung vom Zusatzwärmeübertrager zur einströmenden Zuluft ist in der Strömungsrichtung der Zuluft zunächst die Unterkühlungs-Reihe und anschließend die Enthitzungs-/Kondensationsreihe des Zusatzwärmeübertragers angeordnet. Dadurch kann die zu erwärmende Zuluft zunächst im Gegenstromprinzip in der Unterkühlungs-Reihe vorgewärmt und anschließend in der Enthitzungs-/Kondensationsreihe auf die Austrittstemperatur gebracht werden.

Der Zusatzwärmeübertrager und der Heizungswärmeübertrager bilden eine Heizanordnung des Klimagerätes der Klimaanlage. Das Klimagerät kann zudem einen ebenfalls im Kältemittelkreislauf geschalteten Verdampfer aufweisen, der in einem Kühlbetrieb und/oder für eine Luftentfeuchtung die einströmende Zuluft abkühlen kann. In Abhängigkeit von der zu erzielenden Wärme-/Heizleistung können in Strömungsrichtung der Zuluft zunächst der Verdampfer und anschließend der Zusatzwärmeübertrager und dann der Heizungswärmeübertrager sowie gegebenenfalls ein PTC-Heizelement folgen. Alternativ dazu kann der Heizungswärmeübertrager unmittelbar stromab des Verdampfers angeordnet sein. Die Reihenfolge ist von der jeweiligen Anwendung abhängig.

Je nach Auslegung können die beiden Zusatzwärmeübertrager-Reihen mit dem Kältemittel-Eintritt/Austritt jeweils ein- oder mehrflutig ausgeführt werden. Zudem kann der Zusatzwärmeübertrager auch dreireihig mit einer speziellen Enthitzungsreihe sowie einer Kondensations-Reihe und einer Unterkühlungs-Reihe ausgeführt sein.

Nachfolgend ist ein Ausführungsbeispiel der Erfindung anhand der beigefügten Figuren beschrieben.

Es zeigen:
- Fig. 1: die Schaltung einer Klimaanlage eines Kraftfahrzeugs bei Durchführung einer Heizbetriebsart;
- Fig. 2: in einer Ansicht entsprechend der Fig. 1 die Klimaanlage bei Durchführung einer Kühlbetriebsart; und
- Fig. 3: allgemein einen Wärmepumpenprozess im Heizbetrieb der Klimaanlage in einem Mollier-Diagramm.

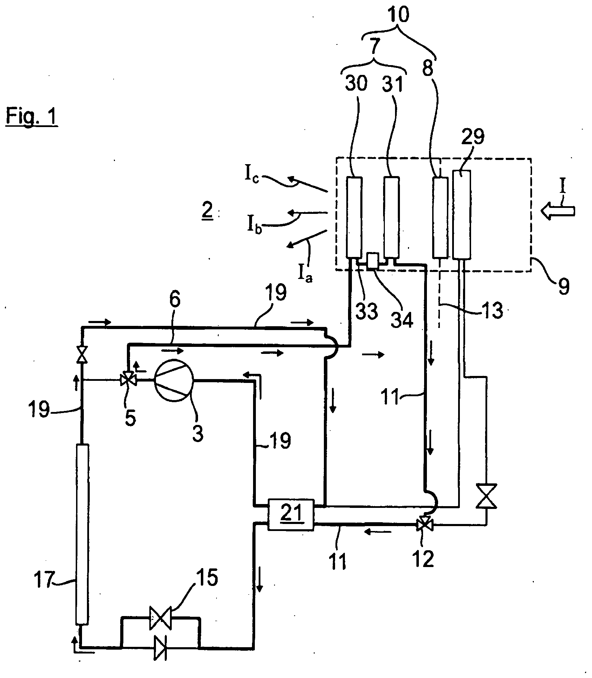

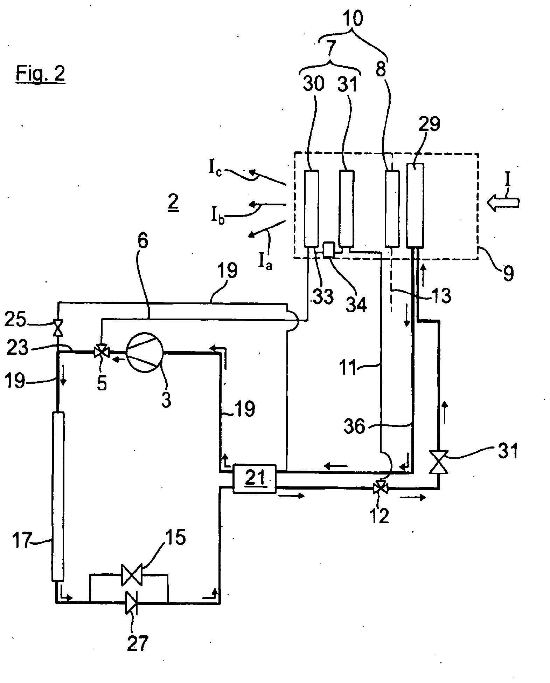

In den Fig. 1 und 2 ist eine Klimaanlage des Kraftfahrzeugs gezeigt, mittels der der Fahrzeuginnenraum 2 gekühlt oder beheizt werden kann. Anhand der Fig. 1 ist die Heizbetriebsart zum Beheizen des Fahrzeuginnenraums 2 dargestellt, wobei die mit Kältemittel durchströmten Teile im Vergleich zu den in der Heizbetriebsart stillgelegten Teilen durch dicke Linien hervorgehoben sind. Demzufolge wird das Kältemittel von einem Verdichter 3 vorzugsweise über ein 3/2-Wegeventil in eine erste Hochdruckleitung 6 geführt, die in Pfeilrichtung zu einem Zusatzwärmeübertrager 7 führt. Der Zusatzwärmeübertrager 7 ist in einem gestrichelt angedeuteten Klimagerät innerhalb eines Luftkanals eines Klimageräts 9 angeordnet, durch den die Zuluft I in den Fahrzeuginnenraum 2 geleitet wird. Nach erfolgter Aufheizung im Klimagerät 9 wird die Warmluft in beispielsweise drei voneinander separate Warmluftströme Iₐ, I_{b}, I_{c} zu unterschiedlichen Personenausströmern (zum Beispiel Defrost-, Mangan-, Fußraumströmer) geleitet.

Der erfindungsgemäß mindestens zweireihige ausgeführte Wärmeübertrager 7 bildet zusammen mit einem Heizungswärmeübertrager 8 eine Heizanordnung 10, die von der Zuluft I durchströmt wird. Der Heizungswärmeübertrager 8 ist dabei in einem nur angedeuteten Kühlmittelkreislauf 13 angeordnet, mit dem die in einer nicht dargestellten Brennkraftmaschine erzeugte Abwärme zum Heizungswärmetauscher 8 geleitet werden kann.

Gemäß der Fig. 1 ist der als Kondensator arbeitende zweireihige Zusatzwärmeübertrager 7 über eine zweite Hochdruckleitung 11 sowie über ein 3/2-Wegeventil 12 unter Zwischenschaltung eines Expansionsorgans 15 mit einem kühlerseitigen Wärmetauscher 17 strömungstechnisch gekoppelt. Dieser kühlerseitige Wärmetauscher 17 arbeitet in der Heizbetriebsart als ein Verdampfer, der der Umgebungsluft Wärme entzieht. Im Kälteanlagenbetrieb erfüllt er die Funktion eines Kondensators. Der kühlerseitige Wärmetauscher 17 ist stromab mit einer Niederdruckleitung 19 bis zur Saugseite des Verdichters 3 geführt. Die Niederdruckleitung 19 wird dabei über, einen inneren Wärmetauscher 21 geleitet, in dem ein Wärmeaustausch mit der Hochdruckseite, das heißt von Hochdruckleitung 11, stattfinden kann. Auch die direkte Einbindung der Leitung 19 vor dem Verdichter 3 ist möglich.

Wie aus der Fig. 1 hervorgeht, weist der Zusatzwärmeübertrager 7 eine erste Wärmeübertrager-Reihe 30 sowie eine zweite Wärmeübertrager-Reihe 31 auf. Diese sind zueinander in Reihe geschaltet und über ein Sammlerrohr 33 mit einem Abscheideraum 34 strömungstechnisch miteinander verbunden. Das Sammlerrohr 33 mündet in diesem Anwendungsbeispiel jeweils bodenseitig in die erste und zweite Wärmeübertrager-Reihe 30, 31.

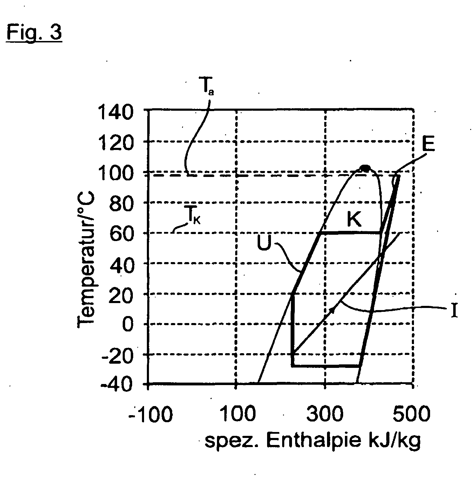

Die beiden Wärmeübertrager-Reihen 30, 31 sind erfindungsgemäß so ausgelegt, dass in der stromabwärtsmäßigen Betrachtung in der ersten Wärmeübertrager-Reihe 30 eine Enthitzung E sowie eine Kondensation K des Kältemittels erfolgen kann. In der zweiten Wärmeübertrager-Reihe 31 erfolgt dagegen eine Unterkühlung U des bereits kondensierten Kältemittels. Zur Veranschaulichung ist in der Fig. 3 ein Wärmepumpenprozess in einem Mollier-Diagramm dargestellt, in dem die Prozessschritte Enthitzung, Kondensation sowie Unterkühlung jeweils mit E, K und U gezeigt sind. Das dargestellte Diagramm betrifft beispielhaft das Kältemittel R134a. Daraus geht hervor, dass eine Verdichter-Austrittstemperatur Tₐ des Kältemittels bei etwa 95°C liegt, während die Kondensation K der ersten Wärmeübertrager-Reihe 30 bei einer Kondensationstemperatur T_{K} bei 60°C liegt.

Erfindungsgemäß ist die Unterkühlungs-Reihe 31 des Zusatzwärmeübertragers 7 in der Strömungsrichtung der Zuluft I der Enthitzungs-/ Kondensations-Reihe 30 vorgelagert. Dadurch wird die in das Klimagerät 9 einströmende Zuluft I im Gegenstromprinzip durch die Unterkühlungs-Reihe 31 vorgewärmt und anschließend durch die Kondensätions-/Enthitzungs-Reihe 30 auf die Klimageräte-Austrittstemperatur erwärmt. Um eine möglichst hohe Kondensationstemperatur T_{K} zu erreichen, ist die Enthitzungs-/Kondensations-Reihe 30 mit stark reduzierter Kältemittel-Luft-Wärmeübertragerfläche ausgeführt. Das gasförmig in die erste Wärmeübertrager-Reihe 30 einströmende Kältemittel wird bei hohem Kondensationsdruck verflüssigt, wodurch sich eine entsprechend hohe Kondensationstemperatur T_{K} einstellt. Proportional zu der somit erreichten Anhebung der Kondensationstemperatur T_{K} ergibt sich eine vergleichsweise große treibende Temperaturdifferenz zwischen der Wärmeübertrager-Reihe 30 und der durchströmenden Zuluft I.

Mit dem Sammlerrohr 33 wird eine funktionelle Trennung zwischen der Enthitzung-/Kondensation in der Wärmeübertrager-Reihe 30 und der

Unterkühlung in der Wärmeübertrager-Reihe 31 erreicht. Im Sammlerrohr 33 sammelt sich das aus der ersten Reihe 30 austretende kondensierte Kältemittel, wobei das noch gasförmige Kältemittel abgeschieden werden kann. Dadurch wird lediglich flüssiges Kältemittel in die Unterkühlungs-Reihe 31 geleitet.

In der Fig. 2 ist die Kühlbetriebsart der Klimaanlage gezeigt, wobei die mit Kältemittel durchströmten Leitungen mit dicken Linien hervorgehoben sind. In der Kühlbetriebsart sperrt das 3/2-Wegeventil 5 stromab des Verdichters 3 die zum Zusatzwärmeübertrager 7 im Klimagerät 9 geführte Leitung 6, während eine Zwischenleitung 23 zur Leitung 19 geöffnet wird. An der Verzweigungsstelle zur Leitung 19 ist auf der vom Wärmetauscher 17 abgewandten Seite das Absperrventil 25 in geschlossener Schaltstellung. Das Kältemittel wird daher durch den kühlerseitigen Wärmetauscher 17 geführt, der in der Kühlbetriebsart als Kondensator Wärme an die Umgebungsluft abgibt.

Anschließend wird das Kältemittel über ein parallel zum Expansionsorgan 15 geschaltetes Ein-Wege-Ventil 27 über den inneren Wärmetauscher 21 sowie über das 3/2-Wege-Ventil 12 zu einem Verdampfer 29. innerhalb des Klimagerätes 9 geführt. Dem Verdampfer 29 ist ein Expansionsorgan 31 vorgeschaltet. Das vom Verdampfer 29 ausströmende Kältemittel wird über die Leitung 36, den inneren Wärmetauscher 21 sowie die Leitung 19 zurück zum Verdichter 3 geführt.

Grundsätzlich kann man diese Idee auch für den Aufbau eines kühlerseitigen Wärmetauschers, dem Kondensator der Kälteanlage, nutzen.

Die Funktion des Heizungswärmeübertragers 8 wird entscheidend von der Betriebsweise der Wärmepumpe beeinflusst. Man kann die Luft ausschließlich über die Wärmepumpe oder über die Wärmepumpe und den Motorkühlkreislauf erwärmen, von dem in der Fig. 1 nur die Kühlmittelleitung 13 gezeigt ist. Entsprechend wird die Betriebsweise des Zusatzwärmeübertragers zu unterscheiden sein. Je nach Betriebsmodus wird auch Einfluss auf die Leistung, aber auch die Effizienz des Gesamtsystems genommen.

## Patentansprüche

1. Fahrzeug mit einer Klimaanlage zum Beheizen einer in den Fahrzeuginnenraum (2) strömenden Zuluft (I), welche einen Heizungswärmeübertrager (8), welcher über einen Kühlmittelkreislauf (13) thermisch mit einem Antriebsaggregat oder dergleichen gekoppelt ist, und einen Zusatzwärmeübertrager (7) aufweist, welcher
- in einen Kältemittelkreislauf der Klimaanlage geschaltet ist,
- im Heizbetrieb Wärme an die Zuluft (I) abgibt und
- zumindest zweireihig mit einer ersten Wärmeübertrager-Reihe (30) und einer zweiten Wärmeübertrager-Reihe (31) ausgebildet ist,
**dadurch gekennzeichnet, dass**
- in Strömungsrichtung der Zuluft (I) zunächst eine Unterkühlungs-Reihe (31) und anschließend eine Enthitzungs-/Kondensations-Reihe (30) angeordnet ist, wobei die beiden Wärmeübertrager-Reihen (30, 31) so ausgelegt sind, dass in der zweiten Wärmeübertrager-Reihe (31) eine Unterkühlung des kondensierten Kältemittels erfolgt und in der ersten Wärmeübertrager-Reihe (30) zumindest eine Enthitzung und gegebenenfalls eine Kondensation des Kältemittels erfolgt und.
- die beiden Wärmeübertrager-Reihen (30, 31) mit einem einen Abscheideraum zum Abscheiden von dampfförmigem Kältemittel vom flüssigen Kältemittel aufweisenden Sammlerrohr (33) verbunden sind, welches das aus der ersten Wärmeübertrager-Reihe (30) tretende flüssige Kältemittel sammelt und zur zweiten Wärmeübertrager-Reihe (31) transferiert.

2. Fahrzeug nach Anspruch 1, **dadurch gekennzeichnet, dass** das Sammlerrohr (33) bodenseitig in die erste und zweite Wärmeübertrager-Reihe (30, 31) mündet.

3. Fahrzeug nach Anspruch 1 oder 2, **dadurch gekennzeichnet, dass** die Klimaanlage des Fahrzeugs ein Klimagerät (9) aufweist, welches neben einer aus Zusatzwärmeübertrager (7) und Heizungswärmeübertrager (8) bestehenden Heizanordnung (10) zusätzlich einen im Kältemittelkreislauf geschalteten Verdampfer (29) aufweist.

4. Fahrzeug nach einem der Ansprüche 1 bis 3, **dadurch gekennzeichnet, dass** der Zusatzwärmeübertrager (7) dreireihig mit einer Enthitzungs-Reihe, einer Kondensations-Reihe und einer Unterkühlungs-Reihe ausgeführt ist.

5. Fahrzeug nach einem der Ansprüche 1 bis 4, **dadurch gekennzeichnet, dass** jede der Zusatzwärmeübertrager-Reihen (30, 31) mit dem Kältemittel-Eintritt und - Austritt ein- oder mehrflutig ausgeführt ist.

## Claims

1. Vehicle having an air-conditioning system for heating a supply air (I) flowing into the vehicle interior (2), which has a thermal heat exchanger (8) being thermally coupled to a drive unit or the like via a coolant circuit (13), and an auxiliary heat exchanger (7) which
- is connected to a refrigerant circuit of the air-conditioning system,
- transfers heat to the supply air (I) during the heating operation and
- is formed at least in two rows with a first heat exchanger row (30) and a second heat exchanger row (31),
**characterized in that**
- firstly an undercooling row (31) and a subsequent desuperheating/condensation row (30) are arranged in the flow direction of the supply air (I), wherein the two heat exchanger rows (30, 31) are configured such that in the second heat exchanger row (31), undercooling of the condensed refrigerant takes place, and in the first heat exchanger row (30), at least desuperheating and, where appropriate, condensation of the refrigerant takes place and
- the two heat exchanger rows (30, 31) are connected to a header (33) which has a separating chamber for separating vaporous refrigerant from liquid refrigerant and which collects the liquid refrigerant exiting from the first heat exchanger row (30) and transfers the same to the second heat exchanger row (31).

2. Vehicle according to claim 1, **characterized in that** the header (33), on the bottom side thereof, leads into the first and the second heat exchanger row (30, 31).

3. Vehicle according to claim 1 or 2, **characterized in that** the air-conditioning system of the vehicle has an air-conditioning device (9) which, in addition to a heating arrangement (10) consisting of auxiliary heat exchanger (7) and thermal heat exchanger (8), further has an evaporator (29) being connected to the refrigerant circuit.

4. Vehicle according to any of claims 1 to 3, **characterized in that** the auxiliary heat exchanger (7) is configured in three rows with one desuperheating row, one condensation row and one undercooling row.

5. Vehicle according to any of claims 1 to 4, **characterized in that** each auxiliary heat exchanger row (30, 31) is formed in a single-flow or multiple-flow configuration with the refrigerant inlet and outlet.

## Revendications

1. Véhicule présentant un système de conditionnement d'air pour le chauffage de l'air d'alimentation (I) entrant dans l'intérieur du véhicule (2), qui présente un échangeur thermique (8) couplé thermiquement à une unité d'entraînement ou similaire par l'intermédiaire d'un circuit de réfrigérant (13), et un échangeur thermique auxiliaire (7) qui
- est relié à un circuit frigorifique du système de conditionnement d'air,
- transfère de la chaleur à l'air d'alimentation lors de l'opération de chauffage,
- est formé au moins en deux rangées avec une première rangée d'échangeurs thermiques (30) et une seconde rangée d'échangeurs thermiques (31),
**caractérisé en ce que**
- une rangée de sous-refroidissement (31) et une subséquente rangée de desurchauffage/de condensation (30) sont agencées dans la direction de circulation d'air d'alimentation (I), dans lequel les deux rangées d'échangeurs thermiques (30, 31) sont configurées de telle manière que dans la seconde rangée d'échangeurs thermiques (31), l'agent frigorifique condensé soit sous-refroidie et dans la première rangée d'échangeurs thermiques (30), l'agent frigorifique soit au moins desurchauffé ou, le cas échéant, soit condensée et
- les deux rangées d'échangeurs thermiques (30, 31) sont reliées à un tuyau collecteur (33) présentant une chambre de séparation pour séparer l'agent frigorifique vaporisé de l'agent frigorifique liquide, qui recueille l'agent frigorifique liquide sortant de la première rangée d'échangeurs thermiques (30), et transférant ledit agent frigorifique à la seconde rangée d'échangeurs thermiques (31).

2. Véhicule selon la revendication 1, **caractérisé en ce que** le tuyau collecteur (33), sur sa face inférieure, est amené dans la première et la seconde rangée d'échangeurs thermiques (30, 31).

3. Véhicule selon la revendication 1 ou 2, **caractérisé en ce que** le système de conditionnement d'air du véhicule comprend un dispositif de conditionnement d'air (9) qui, en plus d'un agencement de chauffage (10) consistant en l'échangeur thermique auxiliaire (7) et en l'échangeur thermique (8), en outre présente un évaporateur (29) relié au circuit frigorifique.

4. Véhicule selon l'une quelconque des revendications 1 à 3, **caractérisé en ce que** l'échangeur thermique auxiliaire (7) est configuré en trois rangées avec une rangée de desurchauffage, une rangée de condensation et une rangée de sous-refroidissement.

5. Véhicule selon l'une quelconque des revendications 1 à 4, **caractérisé en ce que** chacun échangeur thermique auxiliaire (30, 31) est formé dans une configuration à simple flux ou à multiflux avec l'entrée et la sortie de l'agent frigorifique.
